# EUROPEAN PATENT SPECIFICATION

(11) **EP 1 652 766 B1**
(45) Date of publication and mention of the grant of the patent: **18.04.2012**
(21) Application number: 05023536.5
(22) Date of filing: 27.10.2005
(51) Int. Cl.: B62K 25/28

(54) **Straddle-type vehicle**
Im Grätschsitz zu benutzendes Fahrzeug
Véhicule de type monté à califourchon

(30) Priority: 27.10.2004 JP 2004313053
(43) Date of publication of application: 03.05.2006
(73) Proprietor: Yamaha Hatsudoki Kabushiki Kaisha, Iwata-shi, Shizuoka-ken (JP)
(72) Inventor: Takano, Kazuhisa, Iwata-shi Shizuoka-ken (JP)
(74) Representative: Grünecker, Kinkeldey, Stockmair & Schwanhäusser

(56) References cited:
- JP-A- 7 304 484
- JP-A- 2001 106 155
- US-A- 4 712 638
- US-A- 4 723 620
- US-A- 4 828 069
- US-A- 4 828 069

## Description

The present invention relates to a straddle-type vehicle according to the preamble part of independent claim 1. Such a vehicle is known from US 4,712,638.

As a straddle-type vehicle for example the motorcycle, there has been heretofore one In which an engine is mounted on a vehicle body frame of the vehicle, a link mechanism is provided between the vehicle body frame and a rear arm, a rear cushion is supported with the engine case of the engine and the link mechanism, and the rear wheel is suspended through the rear arm for free vertical motion (for example JP-A-2001-106155).

The motorcycle of JP-A-2001-106155 uses a dedicated bracket for supporting the rear cushion on the engine case. Because the dedicated bracket is used to secure strength and rigidity of the attaching part of the rear cushion in the engine case, there are problems such as increased number of parts.

US 4,828,069 shows a motorcycle with different embodiments of disposing a cushion member between an engine body and a swingably supported rear wheel. Further, the engine body has an extending portion which is connected to the motorcycle frame and another extending portion which is connected to one end of the cushion member. These extending portions are formed to constitute engine side attaching parts. So, for any of these connections, said engine body consists of a single extending portion. This leads to a higher weight and complex constriction.

An object of the invention is to provide a straddle-type vehicle as indicated above that can make the rear cushion attaching part of high strength and high rigidity without using a dedicated bracket.

This objective is solved in an inventive manner by a straddle-type vehicle comprising the features of independent claim 1.

Preferably, the one end of the rear cushion opposite the rear wheel is supported on the engine case in the vicinity of a power takeout shaft.

Further, preferably a transmission main shaft constituting a transmission together with the power takeout shaft in the engine case is located above the power takeout shaft, and the attaching part for the rear cushion is located above the power takeout shaft. Therein, beneficially a transmission mechanism is located behind the transmission main shaft.

Yet further, preferably the one end of the rear cushion is attached to a shaft separate from an engine vehicle-body side attaching part for attaching the engine to the vehicle body frame. Therein, beneficially the one end of the rear cushion is attached behind the engine vehicle-body side attaching part for attaching the engine to the vehicle body frame.

Further, beneficially, the engine vehicle-body side attaching part for attaching the engine to the vehicle body frame has a dimension in the vehicle width direction, equal to or larger than that of the attaching part of the rear cushion.

In the following, the present invention is explained in greater detail with respect to several embodiments thereof in conjunction with the accompanying drawings, wherein:
- FIG. 1: is a side view of a motorcycle,
- FIG. 2: is a side view of a vehicle body frame,
- FIG. 3: is a plan view of the vehicle body frame,
- FIG. 4: is an oblique view of the vehicle body frame,
- FIG. 5: is an enlarged plan view of the front part of the vehicle body frame,
- FIG. 6: is a sectional view, taken along the line VI-VI in FIG. 5,
- FIG.7: is an enlarged side view, showing engine suspension and rear cushion attachment,
- FIG. 8: is a side view of the upper attaching part for the rear cushion, and
- FIG. 9: is a plan view of the upper attaching part for the rear cushion.

An embodiment of the straddle-type vehicle is described below. The embodiment shows the most preferable mode, but the teaching is not limited to this embodiment. While a motorcycle is shown as the straddle-type vehicle in this embodiment, the teaching is likewise applicable also to motor-tricycles, buggies and the like.

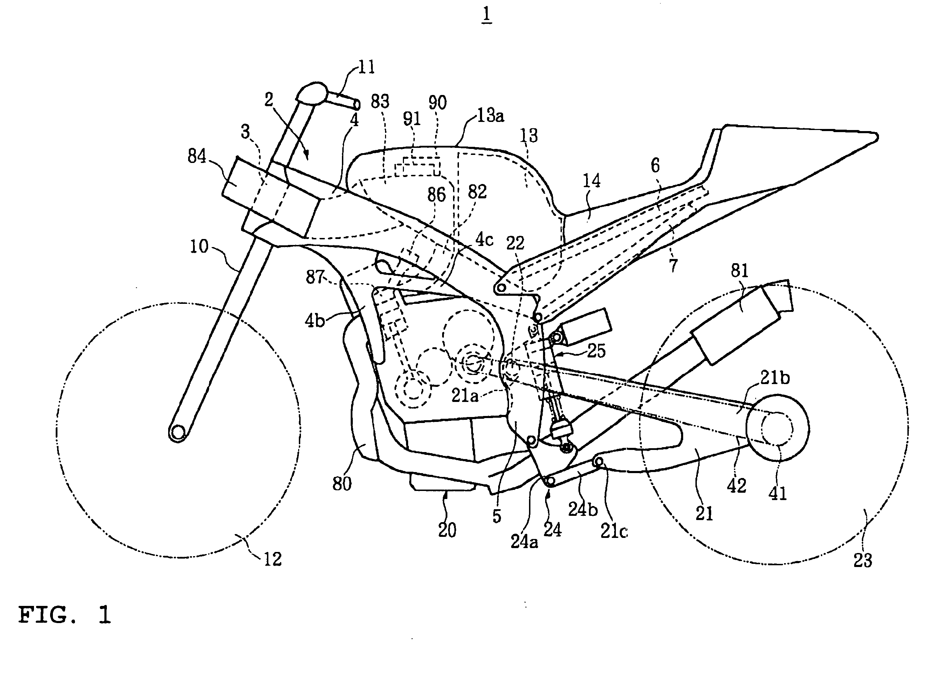

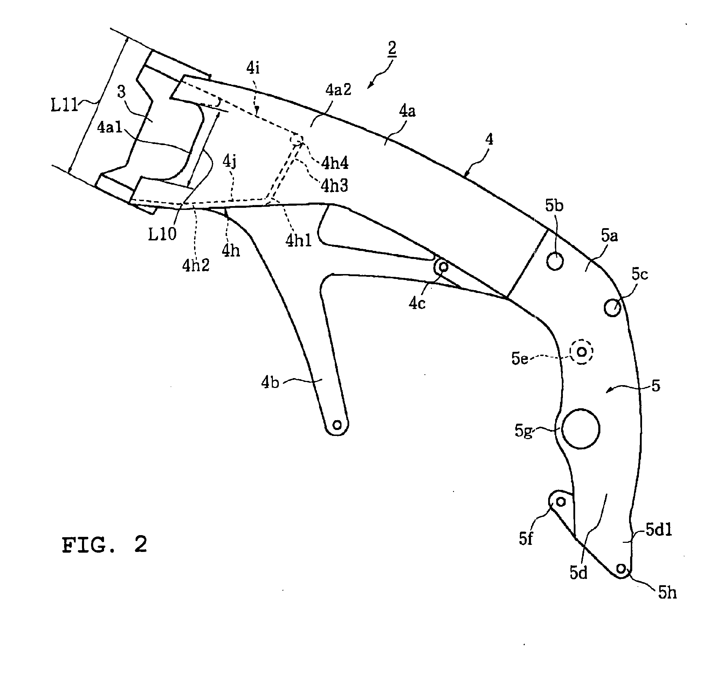

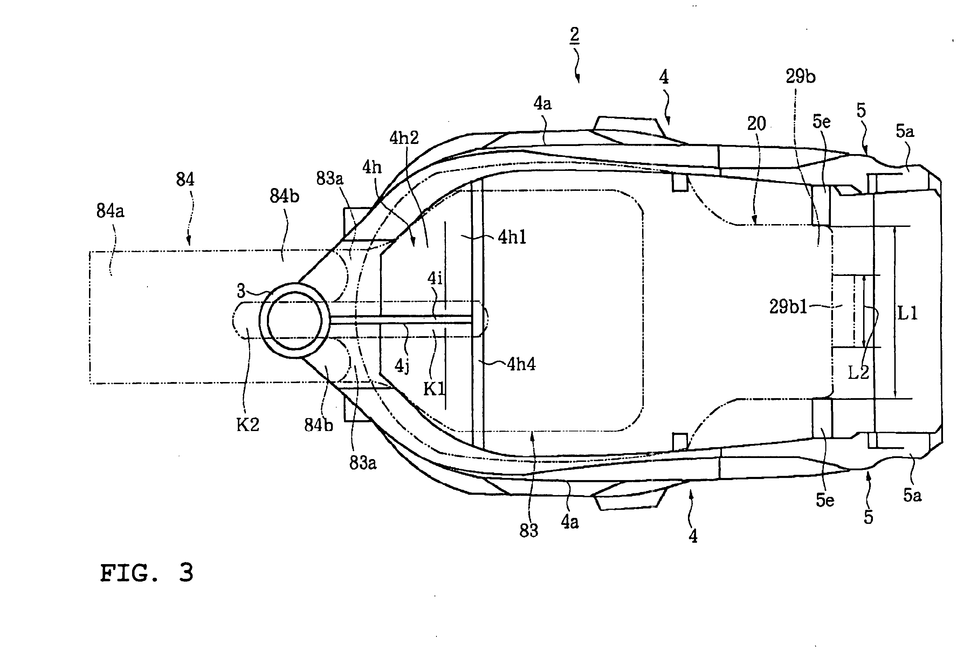

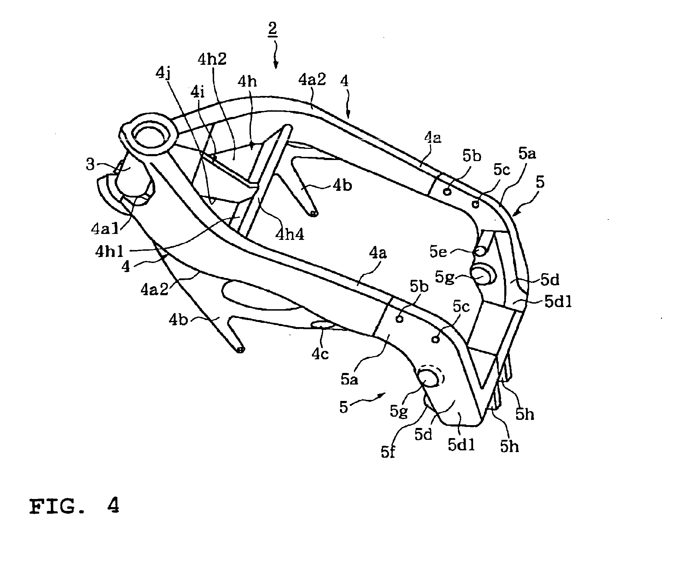

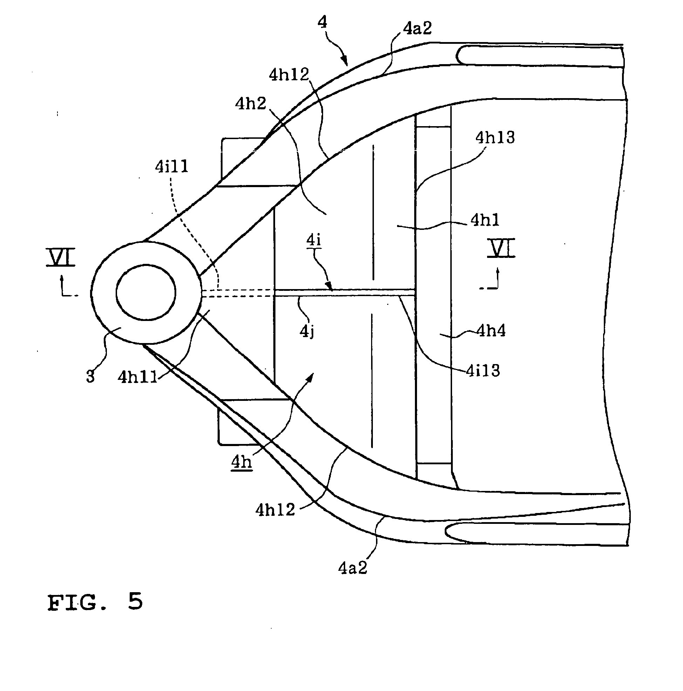

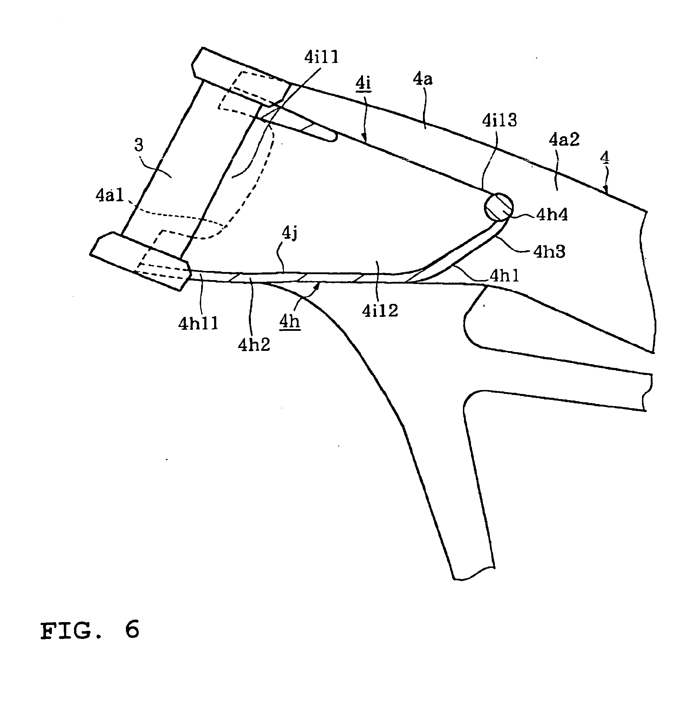

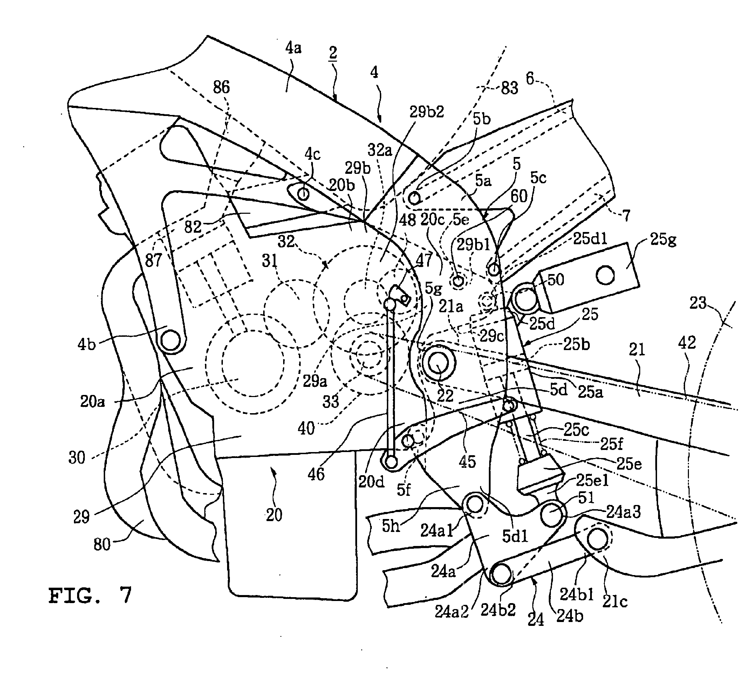

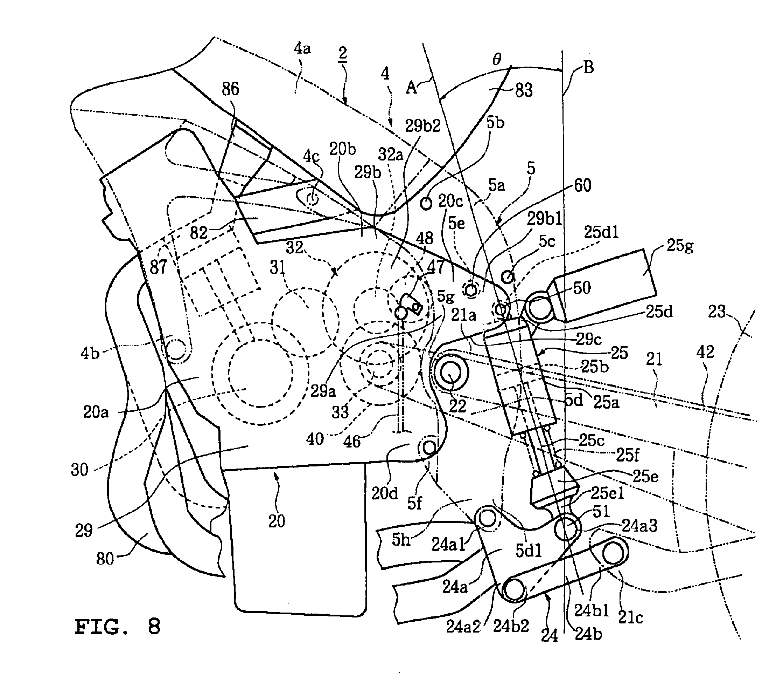

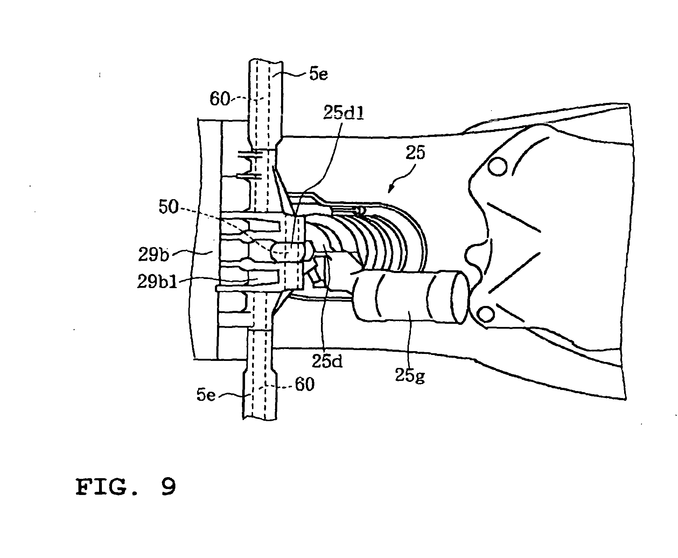

FIG. 1 is a side view of the motorcycle. FIG. 2 is a side view of a vehicle body frame. FIG. 3 is a plan view of the vehicle body frame. FIG. 4 is an oblique view of the vehicle body frame. FIG. 5 is an enlarged plan view of the front part of the vehicle body frame. FIG. 6 is a sectional view, taken along the line VI-VI in FIG. 5. FIG. 7 is an enlarged side view, showing the attachment of the rear cushion and the suspension of the engine. FIG. 8 is a side view of the upper attaching part of a rear cushion. FIG. 9 is a plan view of the upper attaching part of the rear cushion.

The motorcycle 1 of this embodiment has the vehicle body frame 2 including at least: a head pipe 3, a main frame 4 extending from the head pipe 3 toward the rear, and a rear arm bracket 5 extending downward from the rear part of the main frame 4. The main frame 4 has two frame-parts 4a extending right and left rearward from the head pipe 3. The rear parts of the two frame parts 4a extend downward to be connected to the right and left rear arm brackets 5. An engine vehicle-body side attaching part 4b extending downward is formed below the two frame parts 4a. An engine vehicle-body side attaching part 4c is formed in the rear underside part. The rear arm brackets 5 are formed with engine vehicle-body side attaching parts 5e and 5f in right and left upper parts 5a and lower parts 5d, respectively.

The rear arm bracket 5 has, at its right and left upper parts 5a, a seat rail attaching part 5b and a backstay attaching part 5c. To the seat rail attaching part 5b is attached the front part of a seat rail 6. To the backstay attaching part 5c is attached a backstay 7. The rear part of the seat rail 6 and the backstay 7 are joined.

The main frame 4 is formed as shown in FIGs. 2 through 6 with two frame parts 4a extending from the head pipe 3 to right and left respectively and further downward while curving. On both right and left sides of part of the head pipe 3 to which the two frame parts 4a are connected are formed right and left intake duct passage openings 4a1. The main frame 4 has a first plate-shaped member 4h and a second plate-shaped member 4i, with the former extending from the head pipe side of the two frame parts 4a to right and left curved parts 4a2 to join right and left main frames to each other; with the latter connecting with the head pipe 3 along an axis thereof, extending rearward from the head pipe 3, and connecting with the first plate-shaped member 4h.

In this embodiment, the first plate-shaped member 4h is placed only on the lower side of the right and left frame parts 4a of the main frame 4, and the front part 4h11 of the first plate-shaped member 4h is connected to the head pipe 3. Both right and left side parts 4h12 are connected to the right and left frame parts 4a, respectively. The rear side part 4h13 is connected to a cross member 4h4. The second plate-shaped member 4i is placed to extend from the rear center of the head pipe 3 toward the rear. The front part 4i11 of the second plate-shaped member 4i is connected to the rear center position of the head pipe 3. The lower part 4i12 is connected to the first plate-shaped member 4h. The rear side part 4i13 is connected to the central part of the cross member 4h4.

The first plate-shaped member 4h has a plate-shaped part 4h2 and a high rigidity part 4h3 that is higher in rigidity than the plate-shaped part 4h2. The high rigidity part 4h3 functions as a rib to increase rigidity. The part 4h3 of high rigidity is constituted by joining to the cross member 4h4.

While the first plate-shaped member 4h is placed only on the lower of the frame part 4a, and has a part 4h1 extending in the height direction of the main frame 4, the first plate-shaped member 4h may be placed only on the upper side of the frame part 4a. In this way, as the first plate-shaped member 4h has the part extending from upper or lower side to the other, the part extending from one side to the other functions as a rib to increase rigidity.

If the first plate-shaped member 4h is placed only on one of upper and lower sides of the main frame 4, it is possible to use the side, on which the first plate-shaped member 4h is not placed, to lay out other components. While the first plate-shaped member 4h is connected directly to the head pipe 3, it may be connected indirectly through an attaching bracket or the like.

The second plate-shaped member 4i, with its length L10 on the head pipe 3 side being about the same as the length L11 of the head pipe 3, extends from the rear side center of the head pipe 3 toward the rear, and is connected to the cross member 4h4, so as to increase rigidity around the head pipe.

The first plate-shaped member 4h and the second plate-shaped member 4i have a connecting part 4j extending in the fore-and-aft direction of the vehicle to unite the first plate-shaped member 4h and the second plate-shaped member 4i into a single member and increase rigidity of the front side of the main frame 4.

As described above, part of the main frame 4 from the head pipe side to at least the right and left curved parts 4a2 is reinforced with the first plate-shaped member 4h and the second plate-shaped member 4i to increase rigidity around the head pipe. Therefore, deformation of the head pipe 3 of the main frame 4 is restrained even in cases not only longitudinal forces but also torsion forces are applied when rapid acceleration and deceleration as well as rapid turns are made.

A front fork 10 pivots on the head pipe 3. The front fork 10 has, at its top end, steering handlebars 11 and, at its lower end, a front wheel 12. Above the main frame 4 is placed a fuel tank 13 behind which is placed a seat 14 mounted on the seat rail 6. A tank cover 13a covers the fuel tank 13, which is located above the engine 20.

Both the main frame 4 and the rear arm bracket 5 suspend the engine 20. The engine 20 in this embodiment is of a water-cooled, four-stroke cycle, parallel four-cylinder type, with the cylinder axes tilted slightly forward of the vehicle body, with the crankcase 29 encasing the crankshaft 30 directed in the vehicle width direction, suspended from the vehicle frame 2.

An exhaust pipe 80 is connected to the front side of cylinders of the engine 20. The exhaust pipe 80 extends downward from the front side of the cylinders of the engine 20, and toward the rear, so that its rear part is connected to a muffler 81. An intake pipe 82 connects the rear side of the cylinders of the engine 20 to an air cleaner 83, which in turn connects with an intake duct 84.

As shown in FIG. 3, a pair of right and left air introducing openings 83a are formed on the front side of the air cleaner 83. The intake duct 84 is formed, on its front side, with an air introducing opening 84a and, on its rear side, with a pair of right and left air discharge openings 84b. The pair of right and left air introducing openings 83a of the air cleaner 83 and the pair of right and left air discharge openings 84b of the intake duct 84 are interconnected. In the space K1 defined between the pair of right and left air introducing openings 83a of the air cleaner 83 is located the second plate-shaped member 4i. In the space K2 defined between the pair of right and left air discharge openings 84b are located the head pipe 3 and the front side of the second plate-shaped member 4i. Airflow is guided to pass through the air introducing opening 84a of the intake duct 84, and then introduced into the air cleaner 83 from the right and left pair of air discharge openings 84b through the air introducing openings 83a of the air cleaner 83. The air is thus introduced into an intake pipe 82.

The air cleaner 83 is placed between the two frame parts 4a of the main frame 4, in front of the fuel tank 13, and is covered with a tank cover 13a. The cylinders of the engine 20 are provided with a fuel injection device 86 to supply fuel by injection to the combustion chambers 87 of the cylinders.

A suspension support structure of the engine 20 supports the engine side attaching parts 20a and 20b of the engine 20 at engine vehicle-body side attaching parts 4b and 4c of the main frame 4, and supports engine side attaching parts 20c and 20d at engine vehicle-body side attaching parts 5e and 5f of the rear arm bracket 5

The crankshaft 30, a countershaft 31, a transmission 32, and a power takeout shaft 33 are accommodated in the engine case 29 of the engine 20. The countershaft 31 is placed parallel to the crankshaft 30. Power of the crankshaft 30 is taken out from the countershaft 31, transmitted to a transmission main shaft 32a constituting the transmission 32, and transmitted to the power takeout shaft 33 therefrom. The transmission main shaft 32a constituting the transmission 32 together with the power takeout shaft 33 in the engine case 29 is located above the power takeout shaft 33. The engine case 29 is provided with a shift pedal 45. A shift operation lever 47 is rotated with the shift pedal 45 and with a shift rod 46. A transmission mechanism 48 is operated by the shift operation lever 47 to shift transmission gears of plural speeds of the transmission 32.

The power takeout shaft 33 is provided with a drive sprocket 40 as shown in FIGs. 1 and 7. A chain 42 is routed around the drive sprocket 40 and a driven sprocket 41 provided on the rear wheel 23. Thus, engine power is transmitted through the chain 42 to the rear wheel 23.

The rear arm bracket 5 is formed with a rear arm pivot part 5g in a position between the engine vehicle-body side attaching parts 5e and 5f. At the rear arm pivot part 5g is pivoted the front end 21a of the rear arm 21 for free vertical swing through a pivot shaft 22. The rear wheel 23 is supported at the rear end 21b of the rear arm 21. The rear arm 21 is supported through a link mechanism 24 and a rear cushion 25. The link mechanism 24 has a vehicle-body side link 24a and a rear arm side link 24b. One end 24a1 of the vehicle-body side link 24a is rotatably joined to a link attaching part 5h of the rear arm bracket 5. One end 24b1 of the rear arm side link 24b is rotatably joined to a link attaching part 21 c of the rear arm 21. The central part 24a2 of the vehicle-body side link 24a and the other end 24b2 of the rear arm side link 24b are articulated with each other.

The rear cushion 25 is made up of: an oil-filled cylinder part 25a, a piston 25b inserted movably in the cylinder part 25a, a piston rod 25c attached to the piston 25b, a link attaching part 25d provided at an end of the cylinder part 25a, a link attaching part 25e provided at an end of the piston rod 25c, and a spring 25f interposed between the link attaching part 25d and the link attaching part 25e. The oil-filled cylinder part 25a is provided with a sub-tank 25g.

In this embodiment, as shown in FIGs. 7 through 9, the rear cushion 25 is supported at its top end 25d1 of the link attaching part 25d through a support pin 50 on a projection 29b1 of the upper part 29b of the rear part 29a of the engine case 29. The projection 29b1 serves as an attaching part of the rear cushion 25. The lower end 25e1 of the link attaching part 25e is supported at an end 24a3 of a vehicle-body side link 24a through a support pin 51. The vehicle-body side link 24a of the link mechanism 24 is placed nearly vertical in a position below the rear arm pivot part 5g of the rear arm 21 so that the sliding direction (A) of the rear cushion 25 makes a specified angle θ to the vertical (B). Owing to placing the rear cushion 25 as described above, the weight of the rear cushion 25 is not applied as a bending direction force to the sliding parts such as the cylinder part 25a and the piston 25b. Therefore, sliding resistance of the cylinder part 25a and the piston 25b of the rear cushion 25 is reduced to provide favorable motion characteristic.

As shown in FIGs. 7 and 8, the rear part 29a of the engine case 29 is formed with a projection part 29b1 projecting rearward in a position above the recess 29c opposite the rear arm pivot part 5g formed on the rear face of the rear part 29a. Both sides of the projection part 29b1 as shown in FIGs.. 3 and 6 is flanked with the engine vehicle-body side attaching parts 5e formed on the rear arm bracket 5, supported and tightened using a tightening bolt 60. The top end 25d1 of the link attaching part 25d is supported with the projection part 29b1 through the support pin 50.

In this embodiment, the transmission main shaft 32a constituting the transmission 32 together with the power takeout shaft 33 in the engine case 29 is placed above the power takeout shaft 33 to shorten the width of the engine 20 in the fore-and-aft direction of the vehicle. A transmission main shaft holding part 29b2 for holding the transmission main shaft 32a is formed with a projection part 29b1. As the transmission mechanism 48 of the transmission 32 is placed behind the transmission main shaft 32a and the projection 29b1 is formed with the transmission mechanism holding part 29b2, the engine case 29 can be utilized to form the projection 29b1, making it possible to simplify constitution.

Further, since the transmission main shaft 32a is placed above the power takeout shaft 33 and the attaching part of the rear cushion is formed in the vicinity of the transmission main shaft holding part of the engine case 29, the vertical dimension of the rear part 29a of the engine case 29 increases, which makes it possible to increase the degree of freedom in case the longitudinal direction of the rear cushion 25 is set vertical.

Further in this embodiment, on the rear arm bracket 5 constituting the vehicle body frame 2, an extension part 5d1 extending downward from the rear arm pivot part 5g is formed on the lower part 5d. The link attaching part 5h is formed on the extension part 5d1. As the vehicle-body side link 24a is attached to the link attaching part 5h, the frame structure is simplified when the link mechanism 24 is placed below the rear arm pivot part 5g, and it is easy to set the sliding direction approximately vertical by setting the longitudinal direction of the rear cushion 25 to the vertical.

Further, as the extension part 5d1 extends below the engine vehicle-body side attaching part 5f located below the rear arm pivot part 5g out of the engine vehicle-body side attaching parts 5e and 5f of the rear arm bracket 5 for attaching the engine 20 to the vehicle frame 2, the engine 20 also acts as a rigid member, making it possible to support the link mechanism 24 more firmly.

In this embodiment, the top end 25d1 of the rear cushion 25 is supported as shown in FIGs. 7 and 8 in the vicinity of the power takeout shaft 33 to the rear wheel of the engine case 29. Engine power is transmitted through the power takeout shaft 33 and the chain 42 to the rear wheel 23. Because the power takeout shaft 33 receives reaction force from the rear wheel side, part of the engine case 29 supporting the power takeout shaft 33 is usually formed firmly. It is possible to form the attaching part of the rear cushion 25 of high strength and high rigidity without using a dedicated bracket or the like.

Further, the attaching position of the top end 25d1 of the rear cushion 25 is attached to the engine side attaching part 20c, adjacent to the power takeout shaft 33, of the engine 20 attached to the vehicle body frame 2. Incidentally, the attaching position of the top end 25d1 of the rear cushion 25 may be set at the engine side attaching part 20c. Drive reaction force exerted on the engine 20 is also exerted on the engine side attaching part 20c, adjacent to the power takeout shaft 33, where the engine 20 is attached to the vehicle body frame 2. Because the engine side attaching part 20c adjacent to the power takeout shaft 33 where the engine 20 is attached to the vehicle frame 2 is usually made firm, it is possible to make the attaching part of the rear cushion 25 of high strength and high rigidity.

In this embodiment, the transmission main shaft 32a constituting the transmission 32 together with the power takeout shaft 33 in the engine case 29 is placed above the power takeout shaft 33, and the attaching part of the rear cushion 25 is constituted with the projection part 29b1 placed above the power takeout shaft 33. Part of the engine 20, adjacent to the power takeout shaft 33, attached to the vehicle body frame 2 must be spaced by a specified distance from the power takeout shaft 33 to avoid interference with the swing of power transmitting parts such as chain and belt caused by the swing of the rear arm 21. Here, the vertical dimension of the rear part of the engine case 29 increases, and the vertical dimension of the bracket for attaching the engine 20 to the vehicle body frame 2 is avoided from increasing. As a result, it is easy to make the attaching part of the rear cushion 25 of high strength and high rigidity.

Because of placing the transmission mechanism 48 behind the transmission main shaft 32a, the rear upper part of the engine case 29 projects rearward and the bracket for attaching the engine 20 to the vehicle body frame 2 is prevented from becoming large-sized toward the rear. As a result, the attaching part of the rear cushion 25 is easily made of high strength and high rigidity.

As the top end 25d1 of the rear cushion 25 is supported on the projection part 29b1 of the upper part 29b and rear part 29a of the engine case 29 through the support pin 50, and attached to the shaft separate from the engine vehicle-body side attaching part 20c where the engine 20 is attached to the vehicle body frame 2, it is possible to take out the rear cushion 25 only for its maintenance and adjustment while the engine 20 remaining attached to the vehicle body frame 2.

As the top end 25d1 of the rear cushion 25 is attached behind the engine vehicle-body side attaching part 5e where the engine 20 is attached to the vehicle body frame 2, the engine vehicle-body side attaching part 5e for attaching the engine 20 to the vehicle body frame 2 does not stand in the way at the time of work for attaching and removing the rear cushion 2, usually made from behind, resulting in favorable workability.

The dimension in the vehicle width direction of the engine vehicle-body side attaching part 5e is set as shown in FIGs. 3 and 9: The dimension (L1) of the engine vehicle-body side attaching part for attaching the engine 20 to the vehicle body frame ≥ the dimension (L2) of the attaching part of the rear cushion 25. This makes it easy to form the attaching part of the rear cushion 25 integral with the engine vehicle-body side attaching part 5e, in a simple shape, and of high strength and high rigidity.

With the teaching of the present embodiments, one end of the rear cushion is supported in the vicinity of the power takeout shaft, opposite the rear wheel, of the engine case. The power takeout shaft receives drive reaction forces from the rear wheel side or from outside the engine. Therefore, the vicinity of part of the engine case supporting the power takeout shaft is usually formed sturdy, so that the attaching part of the rear cushion is made of high strength and high rigidity without using a dedicated bracket or the like.

The description above discloses (amongst others) an embodiment of a straddle-type vehicle comprising an engine being mounted on a vehicle body frame of the vehicle, a rear wheel being suspended through a rear arm for free vertical motion, and a rear cushion being supported between an engine case of the engine and the rear arm, wherein one end of the rear cushion is supported in the vicinity of a power takeout shaft, opposite the rear wheel, of the engine case.

According to the above embodiment, one end of the rear cushion is supported in the vicinity of the power takeout shaft, opposite the rear wheel, of the engine case. The one end of the rear cushion may be supported at either upper or lower part of the crankcase. Further, the longitudinal direction of the rear cushion may be either vertical or horizontal. The power takeout shaft receives drive reaction forces from the rear wheel side or from outside the engine. Because it receives such reaction forces in whatever case of chain-, belt-, or shaft-drive, part of the engine case in the vicinity of the power takeout shaft is usually formed sturdy, so that the attaching part of the rear cushion is provided with high strength and high rigidity without using a dedicated bracket or the like.

Preferably, the one end of the rear cushion is attached to an engine side attaching part adjacent to the power takeout shaft for attaching the engine to the vehicle body frame.

Accordingly, because the one end of the rear cushion is attached to an engine side attaching part adjacent to the power takeout shaft for attaching the engine to the vehicle body frame, reaction forces applied to the engine are also applied to the engine side attaching part to the vehicle body frame adjacent to the power takeout shaft of the engine. Because the engine side attaching part to the vehicle body frame adjacent to the power takeout shaft of the engine is formed sturdy, the attachment part of the rear cushion may be provided with high strength and high rigidity.

Further, preferably a transmission main shaft constituting a transmission together with the power takeout shaft in the engine case is located above the power takeout shaft, and the attaching part of the rear cushion is located above the power takeout.

According to the above embodiment, the transmission main shaft constituting the transmission together with the power takeout shaft in the engine case is located above the power takeout shaft, and the attaching part of the rear cushion is located above the power takeout shaft. The attaching part, adjacent to the power takeout shaft, for attaching the engine to the vehicle body frame must be spaced by a specified distance from the power takeout shaft to avoid interference with the swing of power transmitting parts such as chain and belt caused by the swing of the rear arm. Here, the vertical dimension of the rear part of the engine case increases, and the vertical dimension of the bracket for attaching the engine to the vehicle body frame is avoided from increasing. As a result, it is easy to make the attaching part of the rear cushion of high strength and high rigidity.

According to a further embodiment, a transmission mechanism is located behind the transmission main shaft.

Accordingly, a transmission mechanism is located behind the transmission main shaft. In this way, the rear upper part of the engine case projects rearward and the bracket for attaching the engine to the vehicle body frame is prevented from becoming large-sized toward the rear. As a result, the attaching part of the rear cushion is easily made of high strength and high rigidity.

According to yet another embodiment, the one end of the rear cushion is attached to a shaft separate from an engine vehicle-body side attaching part for attaching the engine to the vehicle body frame.

Accordingly, the one end of the rear cushion is attached to a shaft separate from the engine vehicle-body side attaching part for attaching the engine to the vehicle body frame. Therefore, it is possible to take out the rear cushion only for its maintenance and adjustment while leaving the engine attached to the vehicle body frame.

According to another embodiment, the one end of the rear cushion is attached behind the engine vehicle-body side attaching part for attaching the engine to the vehicle body frame.

Accordingly, the one end of the rear cushion is attached behind the engine vehicle-body side attaching part for attaching the engine to the vehicle body frame. Therefore, the engine vehicle side attaching part for attaching the engine to the vehicle body frame does not stand in the way at the time of work for attaching and removing the rear cushion, usually made from behind, resulting in favorable workability.

According to another embodiment, the engine vehicle-body side attaching part for attaching the engine to the vehicle body frame has a dimension in the vehicle width direction, equal to or larger than that of the attaching part of the rear cushion.

Accordingly, the engine vehicle-body side attaching part where the engine is attached to the vehicle body frame is sized to be equal to or greater than the attaching part of the rear cushion. Therefore, it is easy to form the rear cushion attaching part integral with the engine vehicle-body side attaching part in a simple shape. As a result, it is easy to make the attaching part of the rear cushion of high strength and high rigidity.

The description above discloses an embodiment of an attaching part of a rear cushion may be made of high strength and high rigidity without using a dedicated bracket, in particular in a straddle-type vehicle comprising an engine 20 mounted on a vehicle body frame 2, a rear wheel 23 is suspended for free vertical motion through a rear arm 21, and a rear cushion 25 supported between the engine case 29 of the engine 20 and the rear arm 21. One end of the rear cushion 25 is supported in the vicinity of a power takeout shaft 33, opposite the rear wheel, of the engine case 29.

## Claims

1. Straddle-type vehicle comprising
a vehicle body frame (2) for supporting an engine (20),
a rear arm (21) for swingably supporting a rear wheel (23),
a rear cushion (25) supported between an engine case (29) of the engine (20) and the rear arm (21), and
wherein a rear arm bracket (5) is formed with a rear arm pivot part (5g) in a position between engine vehicle-body side attaching parts (5e, 5f), and a front end (21 a) of the rear arm (21) is configured to pivot at the rear arm pivot part (5g) through a pivot shaft (22),
**characterized in that**
the vehicle body frame (2) comprises a head pipe (3), a main frame (4) extending from the head pipe (3) toward the rear, and the rear arm bracket (5) extending downward from the rear part of the main frame (4); and
an end of the rear cushion (25) is supported on the engine case (29) in a vicinity of a power takeout shaft (33) of the engine (20) by being attached to an engine side attaching part (20c) adjacent to the power takeout shaft (33) for attaching the engine (20) to the vehicle body frame (2).

2. Straddle-type vehicle according to claim 1, **characterized in that** the one end (25d1) of the rear cushion (25) opposite the rear wheel (23) is supported on the engine case (29) in the vicinity of a power takeout shaft (33).

3. Straddle-type vehicle according to claim 1 or 2, **characterized in that** a transmission main shaft (32a) constituting a transmission (32) together with the power takeout shaft (33) in the engine case (29) is located above the power takeout shaft (33), and the attaching part (29b) for the rear cushion (25) is located above the power takeout shaft (33).

4. Straddle-type vehicle according to claim 3, **characterized in that** a transmission mechanism (48) is located behind the transmission main shaft (32a).

5. Straddle-type vehicle according to claim 1 or 2, **characterized in that** the one end (25d1) of the rear cushion (25) is attached to a shaft (50) separate from an engine vehicle-body side attaching part (29b) for attaching the engine (20) to the vehicle body frame (2).

6. Straddle-type vehicle according to 5, **characterized in that** the one end (25d1) of the rear cushion (25) is attached behind the engine vehicle-body side attaching part (29b) for attaching the engine (20) to the vehicle body frame (2).

7. Straddle-type vehicle according to claim 5 to 6, **characterized in that** the engine vehicle-body side attaching part (29b) for attaching the engine (20) to the vehicle body frame (2) has a dimension in the vehicle width direction, equal to or larger than that of the attaching part (29b1) of the rear cushion (25).

## Patentansprüche

1. Fahrzeug vom Grätschsitz- Typ, aufweisend
einen Fahrzeugkarosserierahmen (2) zum Lagern einer Brennkraftmaschine (20), einen Hinterarm schwenkbaren Lagern eines Hinterrades (23), einen hinteren Dämpfer (25), gelagert zwischen einem Motorgehäuse (29) der Brennkraftmaschine (20) und dem Hinterarm (21), und
wobei ein Hinterarmhalter (5) mit einem Hinterarm- Schwenkteil (5g) in einer Position zwischen den Motorfahrzeug- karosserieseitigen Befestigungsteilen (5e, 5f) gebildet ist, und wobei ein vorderes Ende (21 a) des Hinterarms (21) konfiguriert ist, an dem Hinterarm - Schwenkteil (5g) durch eine Schwenkwelle (22) zu schwenken,
**dadurch gekennzeichnet, dass**
der Fahrzeugkarosserierahmen (2) aufweist ein Kopfrohr (3), einen Hauptrahmen (4), der sich von dem Kopfrohr (3) in Richtung nach hinten erstreckt, und sich der Hinterarmhalter (5) nach unten von dem hinteren Teil des Hauptrahmens (4) nach unten erstreckt; und
ein Ende des hinteren Dämpfer (25) an dem Motorgehäuse (29) in einer Nähe einer Leistungsausgabewelle (33) der Brennkraftmaschine (20) gelagert ist, durch Verbundensein mit einem motorseitigen Befestigungsteil (20c), benachbart zu der Leistungsausgabewelle (33), zum Befestigen der Brennkraftmaschine (20) an dem Fahrzeugkarosserierahmen (2).

2. Fahrzeug vom Grätschsitz- Typ nach Anspruch 1, **dadurch gekennzeichnet, dass** das eine Ende (25d1) des hinteren Dämpfers (25), gegenüberliegend dem Hinterrad (23), an dem Motorgehäuse (29) in der Nähe einer Leistungsausgabewelle (33) gelagert ist.

3. Fahrzeug vom Grätschsitz- Typ nach Anspruch 1 oder 2, **dadurch gekennzeichnet, dass** eine Getriebehauptwelle (32a), die ein Getriebe (32) gemeinsam mit der Leistungsausgabewelle (33) in dem Motorgehäuse (29) bildet, oberhalb der Leistungsausgabewelle (33) angeordnet ist, und das Befestigungsteil (29b) oberhalb der Leistungsausgabewelle (33) angeordnet ist.

4. Fahrzeug vom Grätschsitz- Typ nach Anspruch 3, **dadurch gekennzeichnet, dass** eine Getriebevorrichtung (48) hinter der Getriebehauptwelle (32a) angeordnet ist.

5. Fahrzeug vom Grätschsitz- Typ nach Anspruch 1 oder 2, **dadurch gekennzeichnet, dass** das eine Ende (25d1) des hinteren Dämpfers (25) an einer Welle (50), getrennt von einem Motorfahrzeug- karosserieseitigen Befestigungsteil (29b), zum Befestigen der Brennkraftmaschine (20) an dem Fahrzeugkarosserierahmen (2) befestigt ist.

6. Fahrzeug vom Grätschsitz- Typ nach *Anspruch* 5, **dadurch gekennzeichnet, dass** das eine Ende (25d1) des hinteren Dämpfers (25) hinter dem Motorfahrzeug- karosserieseitigen Befestigungsteil (29b) zum Befestigen der Brennkraftmaschine (20) an dem Fahrzeugkarosserierahmen (2) befestigt ist.

7. Fahrzeug vom Grätschsitz- Typ nach Anspruch 5 bis 6, **dadurch gekennzeichnet, dass** das Motorfahrzeug- karosserieseitige Befestigungsteil (29b) zum Befestigen der Brennkraftmaschine (20) an dem Fahrzeugkarosserierahmen (2) eine Abmessung in der Richtung der Fahrzeugbreite hat, gleich zu oder größer als die des Befestigungsteils (29b1) des hinteren Dämpfers (25).

## Revendications

1. Véhicule du type à enfourcher, comprenant
un cadre de corps de véhicule (2) pour supporter un moteur (20),
un bras oscillant (21) pour supporter de manière oscillante une roue arrière (23),
un amortisseur arrière (25) supporté entre un carter de moteur (29) du moteur (20) et le bras oscillant (21), et
étant précisé qu'un support de bras oscillant (5) est pourvu d'une partie de pivotement de bras oscillant (5g), à un endroit situé entre des pièces de fixation côté moteur-corps de véhicule (5e, 5f), et qu'une extrémité avant (21a) du bras oscillant (21) est conçue pour pivoter sur la partie de pivotement de bras oscillant (5g) grâce à un axe de pivotement (22),
**caractérisé en ce que** le cadre de corps de véhicule (2) comprend un tube supérieur (3), un cadre principal (4) qui s'étend à partir de celui-ci vers l'arrière, et le support de bras oscillant (5) qui s'étend vers le bas à partir de la partie arrière du cadre principal (4) ; et
une extrémité de l'amortisseur arrière (25) est supportée sur le carter de moteur (29) à proximité d'un arbre de sortie (33) du moteur (20) en étant fixée à une partie de fixation côté moteur (20c) près de l'arbre de sortie (33) pour fixer le moteur (20) au cadre de corps de véhicule (2).

2. véhicule du type à enfourcher selon la revendication 1, **caractérisé en ce qu'**une extrémité (25d1) de l'amortisseur arrière (25) opposée à la roue arrière (23) est supportée sur le carter de moteur (29) à proximité d'un arbre de sortie (33).

3. véhicule du type à enfourcher selon la revendication 1 ou 2, **caractérisé en ce qu'**un arbre principal de transmission (32a) qui constitue une transmission (32) avec l'arbre de sortie (33) dans le carter de moteur (29) se trouve au-dessus dudit arbre de sortie (33), et la partie de fixation (29b) pour l'amortisseur arrière (25) se trouve au-dessus de l'arbre de sortie (33).

4. Véhicule du type à enfourcher selon la revendication 3, **caractérisé en ce qu'**un mécanisme de transmission (48) se trouve derrière l'arbre principal de transmission (32a).

5. Véhicule du type à enfourcher selon la revendication 1 ou 2, **caractérisé en ce qu'**une extrémité (25d1) de l'amortisseur arrière (25) est fixée à un arbre (50) séparé d'une partie de fixation côté moteur-corps de véhicule (29b) pour fixer le moteur (20) au cadre de corps de véhicule (2).

6. Véhicule du type à enfourcher selon la revendication 5, **caractérisé en ce qu'**une extrémité (25d1) de l'amortisseur arrière (25) est fixée derrière la partie de fixation côté moteur-corps de véhicule (29b) pour fixer le moteur (20) au cadre de corps de véhicule (2).

7. Véhicule du type à enfourcher selon les revendications 5 à 6, **caractérisé en ce que** la partie de fixation côté moteur-corps de véhicule (29b) pour fixer le moteur (20) au cadre de corps de véhicule (2) a une dimension, dans le sens de la largeur du véhicule, égale ou supérieure à celle de la partie de fixation (29b1) de l'amortisseur arrière (25).
